# EUROPEAN PATENT SPECIFICATION

(11) **EP 4 374 350 B1**
(45) Date of publication and mention of the grant of the patent: **04.03.2026**
(21) Application number: 22751988.1
(22) Date of filing: 19.07.2022
(51) Int. Cl.: G08B 13/24

(54) **SYSTEMS AND METHODS FOR DETERMINING AND USING ELECTRONIC TAG MOTION**
SYSTEME UND VERFAHREN ZUR BESTIMMUNG UND VERWENDUNG VON BEWEGUNG ELEKTRONISCHER ETIKETTEN
SYSTÈMES ET PROCÉDÉS POUR DÉTERMINER ET UTILISER UN MOUVEMENT D'ÉTIQUETTE ÉLECTRONIQUE

(30) Priority: 21.07.2021 US 202163224268 P
(43) Date of publication of application: 29.05.2024
(73) Proprietor: Sensormatic Electronics, LLC, Boca Raton, FL 33487 (US)
(72) Inventor: TRIVELPIECE, Steven E., Boca Raton, Florida 33487 (US)
(74) Representative: Meissner Bolte Nürnberg
(86) International application number: PCT/US2022/073892
(87) International publication number: WO 2023/004316

(56) References cited:
- US-A1- 2010 156 651
- US-B2- 8 461 966

## Description

### BACKGROUND

The present disclosure relates generally to security systems, and more particularly, to a system and methods for determining and using electronic tag motion.

Conventional electronic article surveillance (EAS) systems, known for example from US 2010/0156651 A1, read an electronic tag and determine a motion of the electronic tag and/or the distance between a receiving antenna and the electronic tag based on a difference between power of a transmitting signal to the electronic tag and power of a receiving signal from the electronic tag. However, these EAS systems may not be reliable indicators of actual movement or non-movement of the electronic tag due to interferences from other signals and/or different surface materials that reflect signals.

Accordingly, improvements in EAS systems are desired.

The invention is defined in the appended claims. Embodiments result from the description and description below.

### SUMMARY

This summary is provided to introduce a selection of concepts in a simplified form that are further described below in the DETAILED DESCRIPTION. This summary is not intended to identify key features of the claimed subject matter, nor is it intended to be used as an aid in determining the scope of the claimed subject matter.

A security system for determining and using electronic tag motion is provided. The system may include a transceiver, a memory storing instructions, and one or more processors coupled with the transceiver and the memory. The one or more processors may be configured to receive tag data from an electronic tag, the tag data including a tag identifier corresponding to the electronic tag, a first characteristic of a received signal corresponding to the electronic tag, and a second characteristic of the received signal. The one or more processors may be configured to determine whether the first characteristic matches a first stored characteristic of a previously received signal corresponding to the electronic tag. The one or more processors may be configured to determine whether the electronic tag is in motion based on a comparison of the second characteristic with a second stored characteristic of the previously received signal corresponding to the electronic tag, in response to the first characteristic matching the first stored characteristic. The one or more processors may be configured to monitor movements of the electronic tag, in response to the electronic tag being in motion.

In another aspect, a method for determining and using electronic tag motion is provided. The method may include receiving tag data from an electronic tag, the tag data including a tag identifier corresponding to the electronic tag, a first characteristic of a received signal corresponding to the electronic tag, and a second characteristic of the received signal. The method may include determining whether the first characteristic matches a first stored characteristic of a previously received signal corresponding to the electronic tag. The method may include determining whether the electronic tag is in motion based on a comparison of the second characteristic with a second stored characteristic of the previously received signal corresponding to the electronic tag, in response to the first characteristic matching the first stored characteristic. The method may include monitoring movements of the electronic tag, in response to the electronic tag being in motion.

In another aspect, a computer-readable medium storing computer executable instructions for controlling a security system is provided. The computer-readable medium may include instructions to receive tag data from an electronic tag, the tag data including a tag identifier corresponding to the electronic tag, a first characteristic of a received signal corresponding to the electronic tag, and a second characteristic of the received signal. The computer-readable medium may include instructions to determine whether the first characteristic matches a first stored characteristic of a previously received signal corresponding to the electronic tag. The computer-readable medium may include instructions to determine whether the electronic tag is in motion based on a comparison of the second characteristic with a second stored characteristic of the previously received signal corresponding to the electronic tag, in response to the first characteristic matching the first stored characteristic. The computer-readable medium may include instructions to monitor movements of the electronic tag, in response to the electronic tag being in motion.

Further aspects of the present disclosure are described in more details below.

### BRIEF DESCRIPTION OF THE DRAWINGS

The disclosed aspects will hereinafter be described in conjunction with the appended drawings, provided to illustrate and not to limit the disclosed aspects, wherein like designations denote like elements, and in which:
FIG. 1 is a conceptual diagram of an example security system, according to aspects of the present disclosure;
FIG. 2 is a flowchart of an example method implemented by the security system of FIG. 1, according to aspects of the present disclosure;
FIG. 3 is a flowchart of an example method implemented by the security system of FIG. 1, according to aspects of the present disclosure;
FIG. 4 is a block diagram of the example security system of FIG. 1 including various hardware components and other features, according to aspects of the present disclosure; and
FIG. 5 is a block diagram of various example system components of the security system of FIG. 1, according to aspects of the present disclosure.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known components may be shown in block diagram form in order to avoid obscuring such concepts.

Electronic article surveillance ("EAS") systems are commonly used in buildings (e.g., retail stores) and other settings to monitor merchandise and/or prevent the unauthorized removal of the merchandise from a protected area. Conventionally, a EAS system includes one or more pedestals having an antenna and transmitter that generate an electromagnetic field within an area, known as an interrogation zone. The merchandise may be tagged with an electronic tag (or EAS marker) that, when activated by the electromagnetic field in the interrogation field, generates an electromagnetic response signal. An antenna and receiver in a pedestal may detect this response signal to determine movement of the merchandise and/or determine whether the merchandise has exited a protected area (e.g., exit gate or interrogation zone) of the building.

Conventionally, multipath propagation and signal interference may cause an EAS system to incorrectly determine which electronic tags are in motion and which electronic tags are stationary due to different surfaces (e.g., floors, ceilings, walls, metal fixtures, lighting, or people moving) and surface materials. For example, conventional EAS systems only look at a receiving signal strength indication (RSSI) value when reading an electronic tag to determine whether the electronic tag is in motion or not. However, the RSSI value may vary dramatically due to multipath propagation and signal interference causing inconsistent readings and unreliable data for determining motion of the electronic tags. For example, an increase of 10 decibels (dB) may be a typical reading from an electronic tag (moving or not moving) if only the total RSSI value is read from all antennas over all frequencies for a single tag.

The present disclosure addresses one or more shortcomings of conventional EAS systems by providing systems and methods for determining and using electronic tag motion. In an aspect, the present disclosure uses a database storing a plurality (e.g., one or more) of last read signal strength values and phase values for each electronic tag, for each antenna, for each polarization, and for each frequency of transmission. Based on the information in the database, an apparatus including, for example, artificial intelligence (AI) or machine learning, may make a more accurate determination whether an electronic tag is moving or stationary, as compared to conventional methods used for determining motion of electronic tags. Based on the determination, the apparatus may exclude stationary tags from being monitored and determine which electronics tags are leaving, for example, an exit gate or interrogation zone, indicating possible theft of merchandise.

Turning now to the figures, example aspects are depicted with reference to one or more components described herein, where components in dashed lines may be optional.

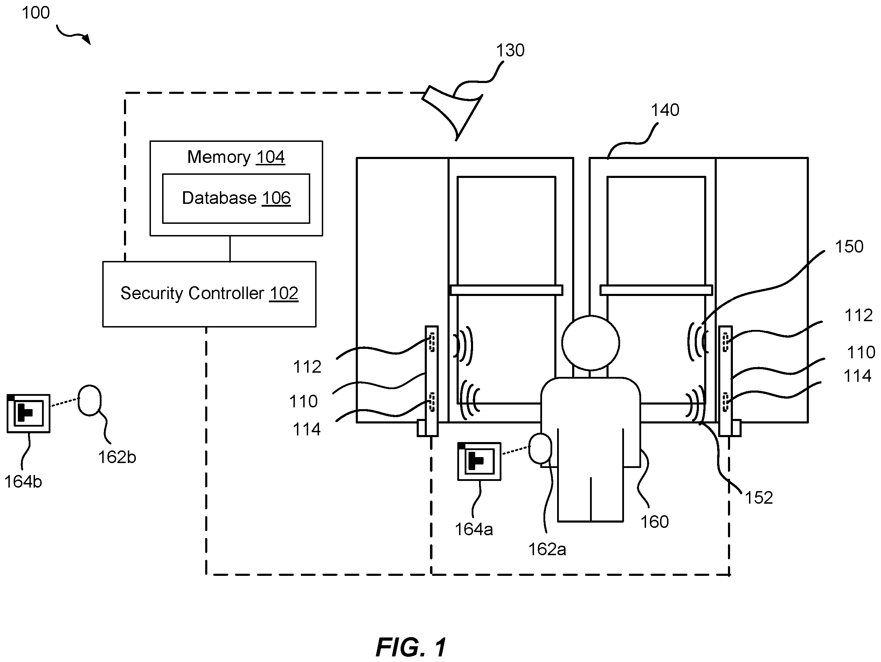

Referring to FIG. 1, an example security system 100 deployed at an establishment (e.g., store) is depicted. The security system 100 may include a security controller 102 configured to control the plurality of components and subsystems of the security system 100. The security controller 102 may be communicatively coupled with a memory 104 having a database 106 for storing tag data.

The security system 100 may also include one or more pedestals 110 communicatively coupled with the security controller 102. While the examples provided herein describe the security system 100 using pedestals 110, one skilled in the art would recognized that other structures (e.g., walls, posts), movable or fixed, may be used to implement the systems and methods described herein. In an aspect, the pedestals 110 may be positioned near the exit doors 140 of the establishment.

Each of the pedestals 110 may include a plurality of antennas (or coils) including one or more transmitting antennas 112 for transmitting an interrogation signal 150 (e.g., electromagnetic fields) and one or more receiving antennas 114 for receiving a data signal 152 (e.g., electromagnetic fields) to detect electronic tags 164a, 164b on merchandise 162a, 162b.

In an aspect, the pedestals 110 may form an interrogation zone (e.g., area around and/or between pedestals 110) from transmitting the interrogation signal 150 and receiving the data signal 152. For example, to monitor merchandise 162a, 162b, the security controller 102 may transmit the interrogation signal 150 to determine whether the merchandise 162a, 162b is within the interrogation zone, and in response to the interrogation signal 150, the electronic tag 164a, 164b to transmit the data signal 152 to the security controller 102.

The interrogation zone may include an area that an individual 160 passes through, for example, near or when exiting through the exit doors 140 of the establishment. In an example, an interrogation zone may be formed based on a transmitting antenna 112 and a receiving antenna 114 of the same pedestal 110 (e.g., same pedestal 110 transmits interrogation signal 150 and receives data signal 152), or may be formed based on a transmitting antenna 112 and a receiving antenna 114 of different pedestals 110 (e.g., first pedestal 110 transmits interrogation signal 150 and second pedestal 110 receives data signal 152).

For purposes of this disclosure, the merchandise 162a (e.g., moving merchandise) may represent an object that is being carried by the individual 160 within the interrogation zone, and the merchandise 162b (e.g., stationary merchandise) may represent an object that is stationary (e.g., on shelf or display case) within the interrogation zone. Examples of the electronic tag 164a, 164b include, but are not limited to, a radio frequency identifier (RFID) tag, an acousto-magnetic tag, or any other type of EAS devices on the merchandise 162a, 162b.

The security system 100 may also include an alarm device 130 communicatively coupled with the security controller 102 and configured to generate an alarm to alert personnel, such as employees of the retail store, police officers, security guards, or any other person, to the unauthorized removal of the merchandise 162a, 162b. In an example, the alarm device 130 generates the alert in response to receiving an alarm signal from the security controller 102. Examples of the alarm device 130 may include one or more of an audio alarm device (e.g., horn), a visual alarm device (e.g., light), a computing device (e.g., personal computer, laptop, mobile device) that receives messages such as text or email (or any form of communication), or any other device capable of alerting personnel of the unauthorized removal of the merchandise 162a, 162b. In an example, the alarm device 130 may be located at the same establishment (e.g., retail store) as the pedestals 110 and/or may be located remote to the establishment.

Conventional EAS systems determine movement of the merchandise based on signal strength (e.g., received signal strength indicator (RSSI) value) of a received data signal. For example, conventional EAS systems may receive a data signal corresponding to an electronic tag, and determine, based on a difference between the RSSI value of the data signal and a previously received RSSI value of a previously received data signal corresponding to the electronic tag, whether merchandise is moving within the interrogation zone. In some examples, conventional EAS systems may use combined RSSI values from different antennas and readers to make the determination. However, reliance on only the RSSI value may result in inaccurate readings from electronic tags. For example, in a real world establishment (e.g., retail store) multipath signals may cause interference and inaccurate signaling because different surfaces (e.g., floors, ceilings, walls, metal fixtures, lighting, or people moving) and surface materials interact with signals in different ways. As a result of multipath signals and interference, when conventional EAS systems calculate the difference between RSSI values, large differences (e.g., 10 decibel (dB)) between RSSI values, which typically indicates movement, may occur when the merchandise is stationary and small differences (e.g., 1-2 dB) between RSSI values, which typically indicates non-movement, may occur when the merchandise is moving.

In an aspect, the security controller 102 may determine whether merchandise 162a, 162b is moving within an interrogation zone. In an example, the security controller 102 may control the antennas 112, 114 to transmit and receive the interrogation signals 150.

Aspects of the present disclosure provide a more accurate determination of movement/non-movement for merchandise 162a, 162b, as compared to conventional EAS systems. In an example, the security system 100 includes a memory 104 having a database 106 for storing and maintaining tag data corresponding to electronic tags 164a, 164b.

In an example, the tag data stored in the database 106 may include tag identifiers, such as an electronic product code (EPC) or any identifier of the electronic tags 164a, 164b, and signal characteristics corresponding to the data signal 152. In an example, the signal characteristics may include second characteristics including, for example, one or more of frequency data corresponding to the data signal 152, polarization data corresponding to the data signal 152, or antenna data corresponding to an antenna that received the data signal 152. The signal characteristics may also include second characteristics such as a signal strength (e.g., RSSI) of the data signal 152 or a phase of the data signal 152.

In an aspect, the database 106 may maintain the tag data, for the signal strength or phase based on tag identifiers for each frequency, for each polarization, and for each antenna. Further, the database may maintain a number (e.g., 1-3) of recently received data signals for each frequency, for each polarization, and for each antenna. In an example, when tag data is received, the security controller 102 may add the tag data to the database 106.

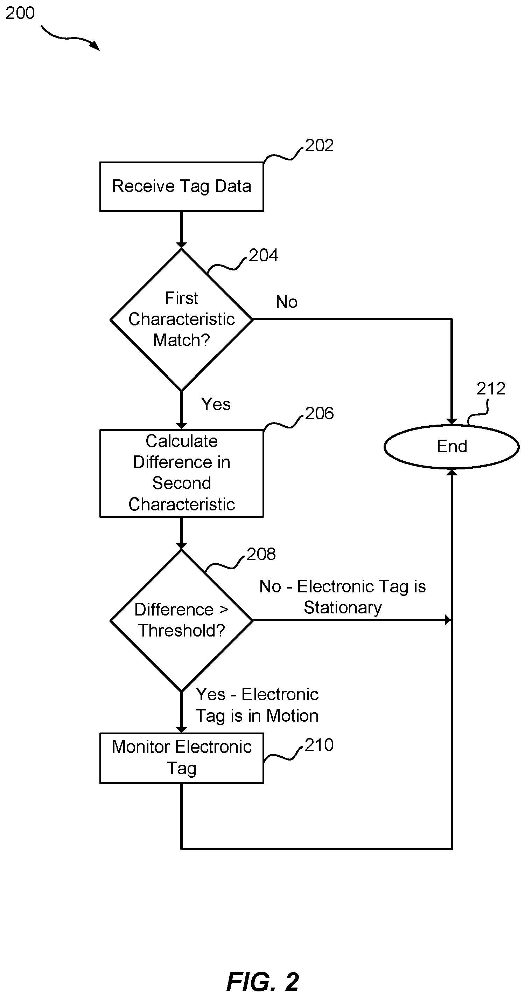

Referring to FIG. 2, an example process 200 used by the security controller 102 for determining whether an electronic tag is in motion is described. At block 202, the security controller 102 receives the data signal 152 which includes tag data of an electronic tag (e.g., electronic tag 164a or 164b). According to the invention, the data signal 152 is received from an electronic tag in response to the security controller 102 transmitting an interrogation signal 150.

In response to receiving the tag data, at block 204, the security controller 102 compares the current tag data from the data signal 152 to stored tag data of the database 106 to determine whether any of the current first characteristics (e.g., frequency, polarization, antenna) match first stored characteristics corresponding to previously received data signals from the same electronic tag. If no match between one or more of the current first characteristics and the first stored characteristics of the database 106 is found, the security controller 102 ends the process, at block 212.

If the security controller 102 determines that one or more current first characteristics matches one or more first stored characteristics of a previously received data signal, at block 206, the security controller 102 calculates a difference between one or more second characteristics, at block 206. According to the invention, the security controller 102 calculates a difference between the signal strength (e.g., RSSI) of the data signal 152 and the signal strength of the previously received data signal, or a difference between the phase of the data signal 152 and the phase of the previously received data signal. At block 208, the security controller 102 compares the difference to a threshold. If the difference in signal strength or phase is at or below a threshold, the security controller 102 determines the electronic tag (e.g., electronic tag 164b) is stationary, and the process ends, at block 212. Alternatively, if the difference in signal strength or phase is above the threshold, the security controller 102 determines the electronic tag (e.g., electronic tag 164a) is in motion.

In response to the electronic tag being in motion, at block 210, the security controller 102 monitors the electronic tag. For example, the security controller 102 may monitor a direction or movement of the electronic tag and/or determine whether the electronic tag has passed through an exit gate of an establishment. In an example, the monitoring of the electronic tag may continue until, for example, determined that the electronic tag becomes stationary, has passed the exit threshold, or canceled or removed from corresponding merchandise. Once the security controller 102 has completed monitoring the electronic tag, the process ends, at block 212.

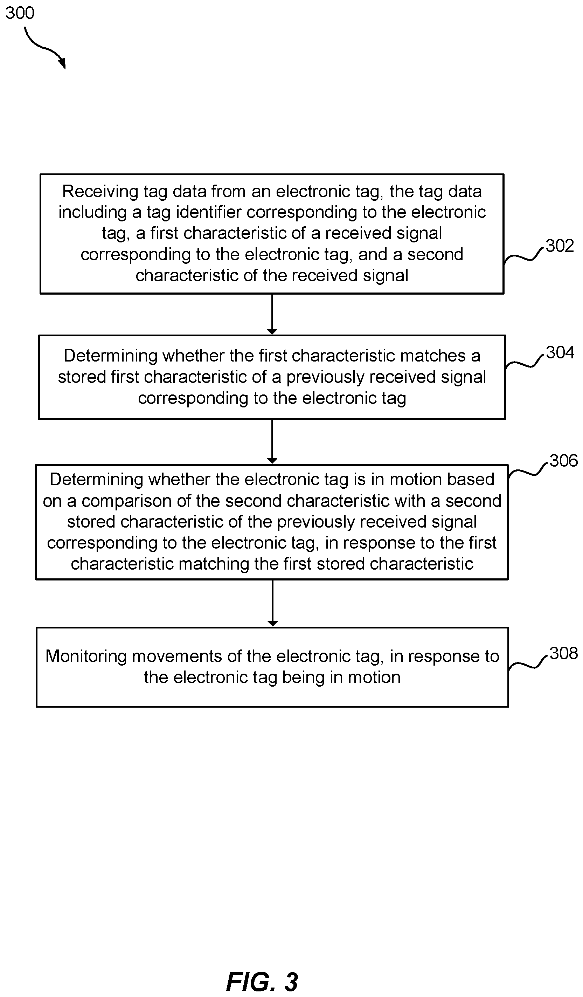

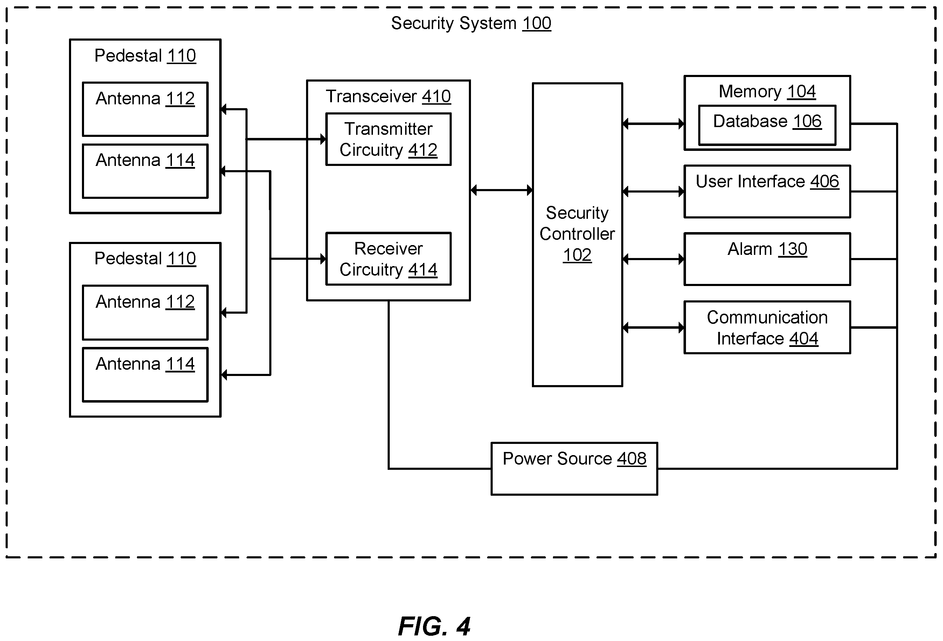

Referring to FIG. 3, an example method 300 of controlling the security system 100 is depicted. The operations of the method 300 may be performed by one or more components of the security system 100 and/or one or more components (e.g., security controller 102, memory 104, transceiver 410, or antenna 112, 114 or FIG. 4) of the security controller 102, as described herein.

At block 302, the method 300 includes receiving tag data from an electronic tag, the tag data including a tag identifier corresponding to the electronic tag, a first characteristic of a received signal corresponding to the electronic tag, and a second characteristic of the received signal. For example, the security controller 102 along with the memory 104, the transceiver 410, and/or the antenna 114 may receive tag data from the data signal 152 from the electronic tag 164a, the tag data includes mayeekde a tag identifier (e.g., EPC) corresponding to the electronic tag 164a, a first characteristic (e.g., frequency, polarization, and/or antenna data) of the data signal 152 corresponding to the electronic tag 164a, and a second characteristic (e.g., signal strength (e.g., RSSI) and/or phase) of the data signal 152. According to the invention, the data signal 152 is received from the electronic tag 164a in response to the security controller 102 transmitting an interrogation signal 150.

At block 304, the method 300 may also include determining whether the first characteristic matches a first stored characteristic of a previously received signal corresponding to the electronic tag. For example, the security controller 102 along with the memory 104 may determine whether the first characteristic matches a first stored characteristic of a previously received signal corresponding to the electronic tag 164a.

At block 306, the method 300 may include determining whether the electronic tag is in motion based on a comparison of the second characteristic with a second stored characteristic of the previously received signal corresponding to the electronic tag, in response to the first characteristic matching the first stored characteristic. For example, the security controller 102 along with the memory 104 may determine whether the electronic tag 164a is in motion based on a comparison of the second characteristic with a second stored characteristic of the previously received signal corresponding to the electronic tag 164a, in response to the first characteristic matching the first stored characteristic. In some aspects, the second characteristics may be formatted (e.g., smoothed, filtered, averaged, etc.) prior to performing the comparison to improve the accuracy of the method 300 by reducing the negative effects of interference and reader error.

At block 308, the method 300 may include monitoring movements of the electronic tag, in response to the electronic tag being in motion. For example, the security controller 102 along with the memory 104 may monitor movements of the electronic tag 164a, in response to the electronic tag being in motion.

In some examples, the method 300 may include storing the tag data in a database according to the tag identifier and the first characteristic, in response to the tag data being received. For example, the security controller 102 along with the memory 104 may store the tag data in the database 106 of the memory 104 according to the tag identifier and the first characteristic, in response to the tag data being received.

In some examples, the method 300 may include maintaining the database to include a plurality of first stored characteristics of a plurality of previously received signals corresponding to the electronic tag and a plurality of second stored characteristics of the plurality of previously received signals, wherein the plurality of first stored characteristics includes the first stored characteristic, and the plurality of second stored characteristics includes the second stored characteristic. For example, the security controller 102 along with the memory 104 may maintain the database 106 to include a plurality of first stored characteristics of a plurality of previously received signals corresponding to the electronic tag 164a and a plurality of second stored characteristics of the plurality of previously received signals, wherein the plurality of first stored characteristics includes the first stored characteristic, and the plurality of second stored characteristics includes the second stored characteristic.

In some examples, the method 300 may include determining a direction of the electronic tag, in response to the electronic tag being in motion. For example, the security controller 102 along with the memory 104 may determine a direction of the electronic tag 164a, in response to the electronic tag 164a being in motion.

In some examples, the method 300 may include determining whether the electronic tag passed through an exit gate, in response to the electronic tag being in motion. For example, the security controller 102 along with the memory 104 may determine whether the electronic tag 164a passed through an exit gate (e.g., the merchandise is being stolen), in response to the electronic tag 164a being in motion.

Referring to FIG. 4, an exemplary security system 100 to implement all or a portion of the functionality described in FIGS. 1-3. For example, the security system 100 may be or may include any components described herein with reference to FIGS. 1-3. The security system 100 may include the security controller 102 which may be configured to execute or implement software, hardware, and/or firmware modules that perform some or all of the functionality described herein with reference to FIGS. 1-3.

The security controller 102 may be one or more processors, micro-controllers, application-specific integrated circuits (ASICs), or field-programmable gate array (FPGAs), and/or may include a single or multiple set of processors or multi-core processors. Moreover, the security controller 102 may be implemented as an integrated processing system and/or a distributed processing system.

The security system 100 may further include the memory 104 (or computer-readable medium including non-transitory medium), such as for storing local versions of applications and media being executed by the security controller 102, related instructions, parameters, etc. The memory 104 may include a type of memory usable by a computer, such as random access memory (RAM), read only memory (ROM), tapes, magnetic discs, optical discs, volatile memory, non-volatile memory, removable storage devices (e.g., program cartridge and cartridge interface or a removable memory chip), and any combination thereof. Additionally, the security controller 102 and the memory 104 may include and execute an operating system executing on the security controller 102, one or more applications, display drivers, etc., and/or other components of the security system 100.

Further, the security system 100 may include a communications interface 404 that provides for establishing and maintaining communications with one or more other devices, parties, entities, etc. utilizing hardware, software, and services. The communications interface 404 may carry communications between components of the security system 100, as well as between the security system 100 and external devices, such as devices located across a communications network and/or devices serially or locally connected to the security system 100. In an aspect, for example, the communications interface 404 may include one or more buses, and may further include transmit chain components and receive chain components associated with a wireless or wired transmitter and receiver, respectively, operable for interfacing with external devices.

The security system 100 may also include a user interface 406 operable to receive inputs from a user of the security system 100 and further operable to generate outputs for presentation to the user (e.g., via a display interface to a display device). The security system 100 may include one or more input devices, including but not limited to a keyboard, a number pad, a mouse, a touch-sensitive display, a navigation key, a function key, a microphone, a voice recognition component, or any other mechanism capable of receiving an input from a user, or any combination thereof. Further, the security system 100 may include one or more output devices, including but not limited to the alarm device 130, a display interface, a speaker, a haptic feedback mechanism, a printer, any other mechanism capable of presenting an output to a user, or any combination thereof.

The security system 100 may also include a power source 408, such as a battery or AC power, that supplies electricity to components of the security system 100. In an example, power source 408 may include one or more power sources such that any of the components of the security system 100 may be individually powered.

The security system 100 may also include a transceiver 410 for transmitting and receiving signals. In an example, the transceiver 410 may include transmitter circuitry 412 electrically coupled to the antennas 112, and receiver circuitry 414 electrically coupled to the antennas 114. In an example, the transmitter circuitry 412 may transmit radio frequency signals (e.g., interrogation signal 150) and the receiver circuitry 414 may receive the radio frequency signals (e.g., data signal 152) based on control signals from the security controller 102.

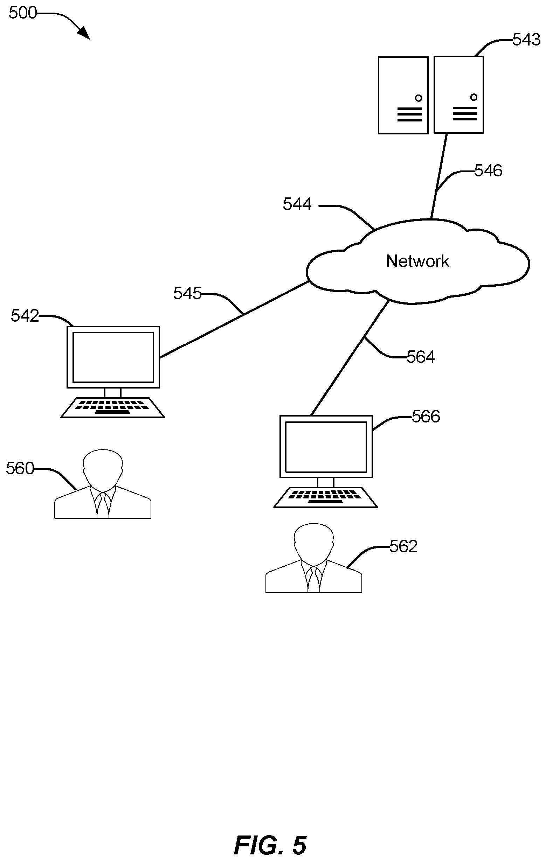

FIG. 5 is a block diagram of various example system components. FIG. 5 shows a communication system 500 including one or more accessors 560, 562 (also referred to interchangeably herein as one or more "users") and one or more terminals 542, 566. The terminals 542, 566 may include the security controller 102 or a related system or subsystem, and/or the like. In one aspect, data for use in accordance with aspects described herein may be input and/or accessed by the accessors 560, 562 via the terminals 542, 566, such as personal computers (PCs), minicomputers, mainframe computers, microcomputers, telephonic devices, or wireless devices, such as personal digital assistants ("PDAs") or a hand-held wireless devices coupled to a server 543, such as a PC, minicomputer, mainframe computer, microcomputer, or other device having a processor and a repository for data and/or connection to a repository for data, via, a network 544 for instance, such as the Internet or an intranet, and couplings 545, 546, 564. The couplings 545, 546, 564 may include wired, wireless, or fiberoptic links. In another example variation, the method and system in accordance with aspects described herein operate in a stand-alone environment, such as on a single terminal.

### Additional Embodiments

An example security system, comprising: a transceiver; a memory storing instructions; and one or more processors coupled with the transceiver and the memory and configured to: receive tag data from an electronic tag, the tag data including a tag identifier corresponding to the electronic tag, a first characteristic of a received signal corresponding to the electronic tag, and a second characteristic of the received signal; determine whether the first characteristic matches a first stored characteristic of a previously received signal corresponding to the electronic tag; determine whether the electronic tag is in motion based on a comparison of the second characteristic with a second stored characteristic of the previously received signal corresponding to the electronic tag, in response to the first characteristic matching the first stored characteristic; and monitor movements of the electronic tag, in response to the electronic tag being in motion.

The above-example security system, wherein the first characteristic is one or more of a frequency corresponding to the second characteristic, a polarization corresponding to the second characteristic, or an antenna corresponding to the second characteristic.

One or more of the above-example security systems, wherein the second characteristic is one of a signal strength indicator of the received signal or a phase difference corresponding to the received signal.

One or more of the above-example security systems, wherein the one or more processors is further configured to: store the tag data in a database according to the tag identifier and the first characteristic, in response to the tag data being received.

One or more of the above-example security systems, wherein the one or more processors is further configured to: maintain the database to include a plurality of first stored characteristics of a plurality of previously received signals corresponding to the electronic tag and a plurality of second stored characteristics of the plurality of previously received signals, wherein the plurality of first stored characteristics includes the first stored characteristic, and the plurality of second stored characteristics includes the second stored characteristic.

One or more of the above-example security systems, wherein the one or more processors is further configured to: determine a direction of the electronic tag, in response to the electronic tag being in motion.

One or more of the above-example security systems, wherein the one or more processors is further configured to: determine whether the electronic tag passed through an exit gate, in response to the electronic tag being in motion.

An example method for determining and using electronic tag motion, the method comprising: receiving tag data from an electronic tag, the tag data including a tag identifier corresponding to the electronic tag, a first characteristic of a received signal corresponding to the electronic tag, and a second characteristic of the received signal; determining whether the first characteristic matches a first stored characteristic of a previously received signal corresponding to the electronic tag; determining whether the electronic tag is in motion based on a comparison of the second characteristic with a second stored characteristic of the previously received signal corresponding to the electronic tag, in response to the first characteristic matching the first stored characteristic; and monitoring movements of the electronic tag, in response to the electronic tag being in motion.

The above-example method, wherein the first characteristic is one or more of a frequency corresponding to the second characteristic, a polarization corresponding to the second characteristic, or an antenna corresponding to the second characteristic.

One or more of the above-example methods, wherein the second characteristic is one of a signal strength indicator of the received signal or a phase difference corresponding to the received signal.

One or more of the above-example methods, further comprising: storing the tag data in a database according to the tag identifier and the first characteristic, in response to the tag data being received.

One or more of the above-example methods, further comprising: maintaining the database to include a plurality of first stored characteristics of a plurality of previously received signals corresponding to the electronic tag and a plurality of second stored characteristics of the plurality of previously received signals, wherein the plurality of first stored characteristics includes the first stored characteristic, and the plurality of second stored characteristics includes the second stored characteristic.

One or more of the above-example methods, wherein the monitoring the movements of the electronic tag comprises: determining a direction of the electronic tag, in response to the electronic tag being in motion.

One or more of the above-example methods, wherein the monitoring the movements of the electronic tag comprises: determining whether the electronic tag passed through an exit gate, in response to the electronic tag being in motion.

An example computer-readable medium storing computer executable instructions for controlling a security system, comprising instructions to: receive tag data from an electronic tag, the tag data including a tag identifier corresponding to the electronic tag, a first characteristic of a received signal corresponding to the electronic tag, and a second characteristic of the received signal; determine whether the first characteristic matches a first stored characteristic of a previously received signal corresponding to the electronic tag; determine whether the electronic tag is in motion based on a comparison of the second characteristic with a second stored characteristic of the previously received signal corresponding to the electronic tag, in response to the first characteristic matching the first stored characteristic; and monitor movements of the electronic tag, in response to the electronic tag being in motion.

The above-example computer-readable medium, wherein the first characteristic is one or more of a frequency corresponding to the second characteristic, a polarization corresponding to the second characteristic, or an antenna corresponding to the second characteristic.

One or more of the above-example computer-readable medium, wherein the second characteristic is one of a signal strength indicator of the received signal or a phase difference corresponding to the received signal.

One or more of the above-example computer-readable medium, further comprising instructions to: store the tag data in a database according to the tag identifier and the first characteristic, in response to the tag data being received.

One or more of the above-example computer-readable medium, further comprising instructions to: maintain the database to include a plurality of first stored characteristics of a plurality of previously received signals corresponding to the electronic tag and a plurality of second stored characteristics of the plurality of previously received signals, wherein the plurality of first stored characteristics includes the first stored characteristic, and the plurality of second stored characteristics includes the second stored characteristic.

One or more of the above-example computer-readable medium, further comprising instructions to: determine a direction of the electronic tag, in response to the electronic tag being in motion; or determine whether the electronic tag passed through an exit gate, in response to the electronic tag being in motion.

The previous description is provided to enable any person skilled in the art to practice the various aspects described herein. Various modifications to these aspects will be readily apparent to those skilled in the art, and the generic principles defined herein may be applied to other aspects. The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, where any such combinations may contain one or more member or members of A, B, or C. Moreover, nothing disclosed herein is intended to be dedicated to the public regardless of whether such disclosure is explicitly recited in the claims. The words "module," "mechanism," "element," "device," and the like may not be a substitute for the word "means." As such, no claim element is to be construed as a means plus function unless the element is expressly recited using the phrase "means for."

## Claims

1. A method for determining and using electronic tag motion, the method comprising a process (200) including:
- receiving, by a security controller (102), a current data signal (152) which includes tag data from an electronic tag (164a, 164b), wherein the current data signal (152) is received from the electronic tag (164a, 164b) in response to the security controller (102) transmitting an interrogation signal (150) to the electronic tag (164a, 164b), the tag data including a current tag identifier corresponding to the electronic tag (164a, 164b), a current first characteristic of the received current data signal (152) corresponding to the electronic tag (164a, 164b), and a current second characteristic of the received current data signal (152);
- wherein the current first characteristic is one or more of a frequency corresponding to the second characteristic, a polarization corresponding to the current second characteristic, or antenna data corresponding to the current second characteristic;and wherein the current second characteristic is one of a signal strength indicator of the received current data signal (152) or a phase difference corresponding to the received current data signal (152);
- comparing, by the security controller (102) the tag data from the current data signal (152) to tag data stored in a database (106) to determine whether any of the current first characteristics match first stored characteristics of a data signal (152) previously received from the electronic tag (164a, 164b); and
- if no match between one or more of the current first characteristics and the first stored characteristics of the database (106) is found, by the security controller (102), ending the process;
- if it is determined, by the security controller (102), that one or more current first characteristics matches one or more first stored characteristics of a previously received data signal (152), calculating, by the security controller (102) a difference between the current second characteristic and a previously received corresponding second characteristic; and, by the security controller (102), comparing the difference to a threshold, wherein:
- if the difference is at or below the threshold, by the security controller (102), determining that the electronic tag (164b) is stationary, and ending the process; and
- if the difference is above the threshold, by the security controller, (102) determining that the electronic tag (164a) is in motion and monitoring movements of the electronic tag (164a), in response to the electronic tag (164a) being in motion.

2. The method of claim 1, further comprising:
- storing the tag data in a database (106) according to the current tag identifier and the current first characteristic, in response to the tag data from the electronic tag (164a, 164b) being received.

3. The method of claim 2, further comprising:
- maintaining the database (106) to include a plurality of first stored characteristics of a plurality of previously received data signals (152) corresponding to the electronic tag (164a, 164b) and a plurality of second stored characteristics of the plurality of previously received data signals (152),
wherein the plurality of first stored characteristics includes the first stored characteristic, and the plurality of second stored characteristics includes the second stored characteristic.

4. The method of claim 1,
wherein the monitoring the movements of the electronic tag (164a) comprises:
- determining a direction of the electronic tag (164a), in response to the electronic tag (164a) being in motion.

5. The method of claim 1,
wherein the monitoring the movements of the electronic tag (164a) comprises:
- determining whether the electronic tag (164a) passed through an exit gate, in response to the electronic tag (164a) being in motion.

6. A security system (100), comprising:
- a transceiver (410);
- a security controller (102) comprising one or more processors; and
- a memory (104);
wherein
- the one or more processors are coupled with the transceiver (410) and the memory (104); and
- the memory (104) stores instructions, which, when executed by the one or more processors cause the security controller (102) to execute a method including the steps of a method according to any of claims 1 to 5.

7. A computer-readable medium storing computer executable instructions for controlling a security system (100), comprising instructions, which, when executed by one or more processors of a security system (100) cause the processors to execute a method including the steps of a method according to any of claims 1 to 5.

## Patentansprüche

1. Verfahren zum Bestimmen und Verwenden der Bewegung eines elektronischen Etiketts, wobei das Verfahren einen Prozess (200) umfasst, der Folgendes einschließt:
- Empfangen, durch eine Sicherheitssteuerung (102), eines aktuellen Datensignals (152), das Etikettdaten von einem elektronischen Etikett (164a, 164b) einschließt, wobei das aktuelle Datensignal (152) von dem elektronischen Etikett (164a, 164b) als Reaktion auf die Übertragung eines Abfragesignals (150) durch die Sicherheitssteuerung (102) an das elektronische Etikett (164a, 164b) empfangen wird, wobei die Etikettdaten eine aktuelle Etikettkennung, die dem elektronischen Etikett (164a, 164b) entspricht, ein aktuelles erstes Merkmal des empfangenen aktuellen Datensignals (152), das dem elektronischen Etikett (164a, 164b) entspricht, und ein aktuelles zweites Merkmal des empfangenen aktuellen Datensignals (152) einschließen;
- wobei das aktuelle erste Merkmal eines oder mehrere der folgenden ist: eine Frequenz, die dem zweiten Merkmal entspricht, eine Polarisierung, die dem aktuellen zweiten Merkmal entspricht, oder Antennendaten, die dem aktuellen zweiten Merkmal entsprechen; und wobei das aktuelle zweite Merkmal entweder eine Signalstärkeanzeige des empfangenen aktuellen Datensignals (152) oder eine dem empfangenen aktuellen Datensignal (152) entsprechende Phasendifferenz ist;
- Vergleichen, durch die Sicherheitssteuerung (102), der Etikettdaten von dem aktuellen Datensignal (152) mit in einer Datenbank (106) gespeicherten Etikettdaten, um zu bestimmen, ob irgendwelche der aktuellen ersten Merkmale mit ersten gespeicherten Merkmalen eines zuvor von dem elektronischen Etikett (164a, 164b) empfangenen Datensignals (152) übereinstimmen; und
- wenn keine Übereinstimmung zwischen einem oder mehreren der aktuellen ersten Merkmale und den ersten gespeicherten Merkmalen der Datenbank (106) von der Sicherheitssteuerung (102) gefunden wird, Beenden des Prozesses;
- wenn durch die Sicherheitssteuerung (102) bestimmt wird, dass eine oder mehrere aktuelle erste Merkmale mit einem oder mehreren ersten gespeicherten Merkmalen eines zuvor empfangenen Datensignals (152) übereinstimmen, Berechnen, durch die Sicherheitssteuerung (102), einer Differenz zwischen dem aktuellen zweiten Merkmal und einem zuvor empfangenen entsprechenden zweiten Merkmal; und Vergleichen der Differenz mit einem Schwellenwert durch die Sicherheitssteuerung (102), wobei:
- wenn die Differenz am oder unter dem Schwellenwert liegt, Bestimmen, durch die Sicherheitssteuerung (102), dass das elektronische Etikett (164b) stationär ist, und Beenden des Prozesses; und
- wenn die Differenz über dem Schwellenwert liegt, Bestimmen, durch die Sicherheitssteuerung (102), dass das elektronische Etikett (164a) in Bewegung ist, und Überwachen von Bewegungen des elektronischen Etiketts (164a) als Reaktion darauf, dass das elektronische Etikett (164a) in Bewegung ist.

2. Verfahren nach Anspruch 1, ferner umfassend:
- Speichern der Etikettdaten in einer Datenbank (106) gemäß der aktuellen Etikettkennung und dem aktuellen ersten Merkmal als Reaktion auf den Empfang der Etikettdaten von dem elektronischen Etikett (164a, 164b).

3. Verfahren nach Anspruch 2, ferner umfassend:
- Verwalten der Datenbank (106), um eine Vielzahl von ersten gespeicherten Merkmalen einer Vielzahl von zuvor empfangenen Datensignalen (152), die dem elektronischen Etikett (164a, 164b) entsprechen, und eine Vielzahl von zweiten gespeicherten Merkmalen der Vielzahl von zuvor empfangenen Datensignalen (152) einzuschließen,
wobei die Vielzahl der ersten gespeicherten Merkmale das erste gespeicherte Merkmal einschließt und die Vielzahl der zweiten gespeicherten Merkmalen das zweite gespeicherte Merkmal einschließt.

4. Verfahren nach Anspruch 1,
wobei die Überwachung der Bewegungen des elektronischen Etiketts (164a) Folgendes umfasst:
- Bestimmen einer Richtung des elektronischen Etiketts (164a) als Reaktion darauf, dass das elektronische Etikett (164a) in Bewegung ist.

5. Verfahren nach Anspruch 1,
wobei die Überwachung der Bewegungen des elektronischen Etiketts (164a) Folgendes umfasst:
- Bestimmen, ob das elektronische Etikett (164a) ein Ausgangstor passiert hat, als Reaktion darauf, dass das elektronische Etikett (164a) in Bewegung ist.

6. Sicherheitssystem (100), umfassend:
- eine Sende/Empfangseinheit (410);
- eine Sicherheitssteuerung (102) mit einem oder mehreren Prozessoren; und
- einen Speicher (104);
wobei
- der eine oder die mehreren Prozessoren mit der Sende/Empfangseinheit (410) und dem Speicher (104) gekoppelt sind; und
- der Speicher (104) Anweisungen speichert, die, wenn sie von dem einen oder den mehreren Prozessoren ausgeführt werden, die Sicherheitssteuerung (102) veranlassen, ein Verfahren auszuführen, das die Schritte eines Verfahrens nach einem der Ansprüche 1 bis 5 einschließt.

7. Computerlesbares Medium, das computerausführbare Anweisungen zur Steuerung eines Sicherheitssystems (100) speichert, umfassend Anweisungen, die, wenn sie von einem oder mehreren Prozessoren eines Sicherheitssystems (100) ausgeführt werden, die Prozessoren veranlassen, ein Verfahren auszuführen, das die Schritte eines Verfahrens nach einem der Ansprüche 1 bis 5 einschließt.

## Revendications

1. Procédé de détermination et d'utilisation du mouvement d'une étiquette électronique, le procédé comprenant un processus (200) comportant :
- la réception, par un dispositif de commande de sécurité (102), d'un signal de données actuel (152) qui comporte des données d'étiquette provenant d'une étiquette électronique (164a, 164b), dans lequel le signal de données actuel (152) est reçu de l'étiquette électronique (164a, 164b) en réponse à la transmission par le dispositif de commande de sécurité (102) d'un signal d'interrogation (150) à l'étiquette électronique (164a, 164b), les données d'étiquette comportant un identifiant d'étiquette actuel correspondant à l'étiquette électronique (164a, 164b), une première caractéristique actuelle du signal de données actuel reçu (152) correspondant à l'étiquette électronique (164a, 164b), et une seconde caractéristique actuelle du signal de données actuel reçu (152) ;
- dans lequel la première caractéristique actuelle est l'une ou plusieurs d'une fréquence correspondant à la seconde caractéristique, d'une polarisation correspondant à la seconde caractéristique actuelle ou de données d'antenne correspondant à la seconde caractéristique actuelle ; et dans lequel la seconde caractéristique actuelle est soit un indicateur de force de signal du signal de données actuel reçu (152), soit une différence de phase correspondant au signal de données actuel reçu (152) ;
- la comparaison, par le dispositif de commande de sécurité (102), des données d'étiquette du signal de données actuel (152) aux données d'étiquette stockées dans une base de données (106) afin de déterminer si l'une quelconque des premières caractéristiques actuelles correspond à des premières caractéristiques stockées d'un signal de données (152) précédemment reçu de l'étiquette électronique (164a, 164b) ; et
- si aucune correspondance n'est trouvée entre l'une ou plusieurs des premières caractéristiques actuelles et des premières caractéristiques stockées de la base de données (106), l'arrêt, par le dispositif de commande de sécurité (102), du processus ;
- si le dispositif de commande de sécurité (102) détermine qu'une ou plusieurs premières caractéristiques actuelles correspondent à une ou plusieurs premières caractéristiques stockées d'un signal de données précédemment reçu (152), le calcul, par le dispositif de commande de sécurité (102), d'une différence entre la seconde caractéristique actuelle et une seconde caractéristique correspondante précédemment reçue ; et, la comparaison, par le dispositif de commande de sécurité (102), de la différence à un seuil, dans lequel :
- si la différence est égale ou inférieure au seuil, la détermination, par le dispositif de commande de sécurité (102), que l'étiquette électronique (164b) est immobile, et l'arrêt du processus ; et
- si la différence est supérieure au seuil, la détermination, par le dispositif de commande de sécurité (102), que l'étiquette électronique (164a) est en mouvement et la surveillance des mouvements de l'étiquette électronique (164a), en réponse au fait que l'étiquette électronique (164a) est en mouvement.

2. Procédé selon la revendication 1, comprenant également :
- le stockage des données d'étiquette dans une base de données (106) selon l'identifiant d'étiquette actuel et la première caractéristique actuelle, en réponse à la réception des données d'étiquette électronique (164a, 164b).

3. Procédé selon la revendication 2, comprenant également :
- le maintien de la base de données (106) pour inclure une pluralité de premières caractéristiques stockées d'une pluralité de signaux de données précédemment reçus (152) correspondant à l'étiquette électronique (164a, 164b) et une pluralité de secondes caractéristiques stockées de la pluralité de signaux de données précédemment reçus (152),
dans lequel la pluralité de premières caractéristiques stockées comporte la première caractéristique stockée, et la pluralité de secondes caractéristiques stockées comporte la seconde caractéristique stockée.

4. Procédé selon la revendication 1, dans lequel la surveillance des mouvements de l'étiquette électronique (164a) comprend :
- la détermination d'une direction de l'étiquette électronique (164a), en réponse au fait que l'étiquette électronique (164a) est en mouvement.

5. Procédé selon la revendication 1, dans lequel la surveillance des mouvements de l'étiquette électronique (164a) comprend :
- le fait de déterminer si l'étiquette électronique (164a) est passée par une porte de sortie, en réponse au fait que l'étiquette électronique (164a) est en mouvement.

6. Système de sécurité (100), comprenant :
- un émetteur-récepteur (410) ;
- un dispositif de commande de sécurité (102) comprenant un ou plusieurs processeurs ; et
- une mémoire (104) ;
dans lequel
- les un ou plusieurs processeurs sont couplés à l'émetteur-récepteur (410) et à la mémoire (104) ; et
- la mémoire (104) stocke des instructions qui, lorsqu'elles sont exécutées par les un ou plusieurs processeurs, amènent le dispositif de commande de sécurité (102) à exécuter un procédé comportant les étapes d'un procédé selon l'une quelconque des revendications 1 à 5.

7. Support lisible par ordinateur stockant des instructions exécutables par ordinateur pour commander un système de sécurité (100), comprenant des instructions qui, lorsqu'elles sont exécutées par un ou plusieurs processeurs d'un système de sécurité (100), amènent les processeurs à exécuter un procédé comportant les étapes d'un procédé selon l'une quelconque des revendications 1 à 5.
